# EUROPEAN PATENT SPECIFICATION

(11) **EP 2 834 540 B1**
(45) Date of publication and mention of the grant of the patent: **27.09.2017**
(21) Application number: 13772794.7
(22) Date of filing: 03.04.2013
(51) Int. Cl.: F16H 59/34, F16H 61/02, F16H 59/14, B60W 10/11, B60W 40/10, B60W 30/18

(54) **METHOD AND SYSTEM FOR FUEL EFFICIENT PROPULSION OF A VEHICLE**
VERFAHREN UND SYSTEM FÜR KRAFTSTOFFEFFIZIENTEN ANTRIEB EINES FAHRZEUGES
PROCÉDÉ ET SYSTÈME PERMETTANT UNE PROPULSION À HAUT RENDEMENT ÉNERGÉTIQUE D'UN VÉHICULE

(30) Priority: 05.04.2012 SE 1250348
(43) Date of publication of application: 11.02.2015
(73) Proprietor: Scania CV AB, 151 87 Södertälje (SE)
(72) Inventor: TELBORN, Klas, 152 71 Södertälje (SE)
(74) Representative: Scania CV AB
(86) International application number: PCT/SE2013/050364
(87) International publication number: WO 2013/151492

(56) References cited:
- EP-A2- 1 386 775
- WO-A1-2011/031219
- WO-A1-2011/031219
- DE-A1-102007 044 434
- GB-A- 665 468
- KR-B1- 100 936 562
- KR-B1- 100 936 562
- US-A- 4 905 544
- US-A1- 2004 020 283
- US-A1- 2006 105 881
- US-A1- 2008 168 964
- US-A1- 2011 208 395

## Description

### Technical field of the invention

The present invention concerns a method and a system related to the propulsion of a vehicle. The invention pertains in particular to a method and a system related to the propulsion of a vehicle when a decreased demand for power for the propulsion of said vehicle arises. The present invention also concerns a vehicle, as well as a computer program and a computer program product that implement the method according to the invention.

### Background of the invention

In the context of the propulsion of heavy vehicles such as goods vehicles, buses and the like, vehicle economy has, over time, had an ever-greater impact on the profitability of the enterprise in which the vehicle is used. In general, and with the exception of the cost of acquiring the vehicle, the main expenses associated with the ongoing operation of a vehicle comprise the salary paid to the driver of the vehicle, repair and maintenance costs, and fuel for propelling the vehicle.

Depending on the type of vehicle, various factors can have a major impact, but fuel consumption generally constitutes a major expense item, and because the degree of utilization of heavy vehicles is often high, with its associated heavy total fuel consumption, the cost of fuel can affect the profitability of the owner of the vehicle, such as a carting company or the like, to a very great extent.

Any opportunity to reduce fuel consumption can thus affect profitability in a positive way, and optimizing fuel consumption is particularly important in connection with long-haul operations. For example, long-haul vehicles have been produced for this purpose, which vehicles are characterized by a typical cruising rpm for combustion engines, where the cruising rpm is adapted for a given cruising velocity. Typical cruising velocities can be, for example 80 km/h, 85 km/h or 89 km/h, depending on the region and/or type of road.

Furthermore, in the case of heavy vehicles it is often desirable for them to be able to be driven in a manner that is as comfortable as possible for the driver, with the result that automatic transmissions are often used wherein the gear changes are fully or partly controlled by the control system commonly present in the vehicle.

Automatic transmission also enables additional degrees of freedom in controlling the propulsion of the vehicle from a fuel economy standpoint. For example, the use of cruise control is commonplace today. One common purpose of cruise control is to achieve a uniform predetermined velocity in a manner that is comfortable for the driver of the vehicle, although there are also cruise control functions that strive to adapt the propulsion of the vehicle based on knowledge about the road ahead, so that the fuel consumption can be kept at as low a level as possible. Such a reduction in fuel consumption can, for example, be achieved with the help of cruise control functions wherein the vehicle velocity is allowed to deviate from the velocity selected by the driver, for example based on knowledge about the vehicle route or other data, so as to thereby achieve more fuel-economic propulsion of the vehicle. For example, the vehicle velocity can be reduced somewhat at the end of an uphill stretch that is followed by a downhill stretch of a type such that, with the help of the force of gravity, the vehicle will be affected by a positive power component in the direction of vehicle travel and reaccelerated to the desired velocity.

In addition to said fuel economy aspect, it is also becoming increasingly important for the vehicle to, at the same time, be propelled in a manner that the vehicle driver experiences as being both intuitive and comfortable.

EP 1386775 A2, which shows the features of the preambles according to claim 1 and claim 15, discloses a vehicle comprising an engine, a transmission connected to the engine, a detecting device for detecting the current vehicle speed, a detecting device for detecting the current gear position of the transmission, and a controller. The controller functions to set the difference between the maximum drive force of the vehicle at the current vehicle speed and transmission gear position, and the running resistance at the current speed as the spare drive force; to set the difference between the current drive force of the vehicle and the running resistance at the current vehicle speed as the excess drive force; and to control the engine or the transmission so as to reduce the ratio of the excess drive force to the spare drive force.

US4905544 A discloses an engine and transmission control apparatus for use in passenger cars and other applications includes a throttle-and-gear-ratio control system and a special calibration of the engine fuel metering system, both being oriented toward maximum fuel economy. Although the engine calibration was originated for use with the continuously variable type of transmission, the apparatus is instead intended for use with discrete-ratio transmissions. The throttle-and-gear-ratio control system makes only small sacrifices in fuel economy in order to significantly reduce the number of gearshifts executed by the transmission.

### Summary of the invention

One object of the present invention is to provide a method for the propulsion of a vehicle that can further reduce the fuel consumption of a vehicle powered by a combustion engine, and/or enhance the comfort of the vehicle driver during the propulsion of said vehicle. This object is achieved by a method according to claim 1 and a system according to claim 15.

The present invention refers to a method related to the propulsion of a vehicle, wherein said vehicle comprises a combustion engine, and wherein said combustion engine can be coupled with at least one drive shaft via a transmission that is adjustable to a plurality of gear ratios in order to impart a torque to said drive shaft for propelling said vehicle. The forward travel of said vehicle is affected by a running resistance, and the method comprises, when said vehicle is propelled using said transmission set to a first gear ratio:
- a determination as to whether the supply of a quantity of fuel to said combustion engine has decreased to a first level due to reduced running resistance, and
- setting said transmission to a second gear ratio that is lower compared to said first gear ratio within a first time from when the fuel supplied to said combustion engine decreased to said first level.

The transmission is preferably one that can be set to a number of fixed gear ratios, i.e. a number of fixed gears.

As noted above, it is desirable to be able to propel a vehicle in a manner that is as fuel efficient as possible. As long as the vehicle is being driven along a horizontal road, the fuel efficiency of the vehicle will be governed mainly by how close to its optimal efficiency the combustion engine is running. For this reason, the total gearing for a heavy vehicle is adapted based on the preferences of a user in terms of, e.g. the cruising velocity and/or average velocity at which the vehicle is expected to be driven during its daily operation. With the help of such adaptation, the combustion engine can, to the greatest possible extent, be enabled to run at an rpm within a preferred rpm range during the propulsion of the vehicle.

In the case of vehicles that are being driven in hilly terrain, fuel consumption can be affected in other ways. For example, the vehicle velocity on an uphill stretch can, in accordance with the foregoing, be allowed to fall to a velocity that is lower compared to the preferred cruising velocity of the vehicle, whereupon the vehicle will subsequently, on a subsequent downhill section, be able to be reaccelerated by the force of gravity to the desired velocity without, or essentially without, the combustion engine having to supply power to propel the vehicle.

However, such propulsion of a vehicle over, for example, a hillcrest can be further improved. A loaded vehicle that is being driven up an uphill stretch can be arranged so as to be driven at a lower gear than the highest gear of the vehicle (i.e. the vehicle is driven with the transmission set to a higher gear ratio than the lowest gear ratio to which the transmission can be set). When the vehicle then reaches an ensuing crest or an ensuing downhill stretch, with the associated decrease in running resistance, an upshift to a higher gear (i.e. a lower gear ratio) will occur. However, said upshift is often performed in a way that is disadvantageous from a fuel consumption standpoint and/or from a driver comfort perspective.

According to the present invention, a higher gear than the current gear is engaged as described above, such as the highest gear (the lowest gear ratio) to which said transmission can be set when the fuel supplied to said combustion engine has decreased to a first level due to decreased running resistance. Said setting of the transmission to a lower gear ratio is performed within a first time from when the fuel supplied to said combustion engine decreased to said first level, wherein said first time is extremely brief and can consist, e.g. of a suitable time in the range of 0-3 seconds. According to one embodiment, said first time consists of a suitable time in the range of 0-1 seconds. Changing to a lower gear ratio preferably occurs immediately, or at least essentially immediately, when the fuel supplied to the combustion engine of the vehicle has been reduced to said first level.

Said first level for supplied fuel can, for example, consist of a level at which a demand for torque/motive force has fallen to a level at which no, or essentially no, torque is demanded from said combustion engine for transfer to said drive wheels, whereupon a gear change can be performed at a time that the vehicle driver experiences as being intuitive. Said first level for said supplied fuel can also be represented by a level at which the supplied fuel has decreased to essentially zero, or entirely to zero, i.e. no fuel is being supplied to said combustion engine and the vehicle is thus being driven with the fuel supply shut off. This entails a level at which the torque generated by the combustion engine becomes negative due to, for example, losses in the power train.

Said first level can also consist of a level that results in the combustion engine delivering a certain proportion of its maximum torque, such as e.g. 5% of its maximum deliverable torque.

By shifting the vehicle to a higher gear (a lower gear ratio) according to the invention precisely when or at least within a first time after the fuel supplied falls to said first level, it is possible to ensure that the higher gear, with its resulting lower combustion engine rpm, will be engaged at an advantageous time from a fuel consumption perspective and, for example, not unnecessarily late.

However, the present invention offers further advantages. As noted above, it is become increasingly important for the vehicle, in addition to be driven as fuel efficiently as possible, to be driven in a manner that the vehicle driver experiences as being intuitive and comfortable as well. If the vehicle control systems, e.g. controlled by a cruise control function, determine that upshifting to a higher gear is to be performed at an earlier time than as described above, i.e. before the fuel supplied has been reduced to a level at which shifting can be performed, this can result in a shifting process wherein a forced decrease in the fuel supplied is performed, i.e. a decrease in the fuel supplied that is not performed as a direct consequence of a reduced running resistance, which is then followed by the respective disengagement and engagement of the previous and new gear, plus a new increase in the fuel supplied followed immediately by a decrease in the fuel supplied due to a reduced demand for motive force. Such a process may be advantageous from a fuel consumption standpoint, but it can be experienced as highly annoying by the vehicle driver, as the propulsion of the vehicle will tend to be spasmodic. Such comfort disruptions are avoided with the help of the present invention.

According to one embodiment of the present invention, a determination is made as to whether the fuel supplied to the combustion engine is expected to decrease to said first level within a given time, such as within a suitable number of seconds, such as 1, 5 or 10 seconds, whereupon shifting to a higher gear is prevented during said time in order to avoid scenarios such as described above. Said determination as to whether upshifting is to be prevented or not can, for example, be arranged so as to be performed by a cruise control function or another suitable function.

Furthermore, if upshifting to a higher gear occurs at a later time than the time according to the present invention, such as when the vehicle is already on a downhill stretch with, for example, a lugging combustion engine, and thus being driven with a relatively low engine sound, actions taken in the power train, such as a gear change will, because of the relatively low noise level in the cab, be significantly more obvious to the vehicle driver than would a normal gear change. As a result, the driver may be unnecessarily disturbed by noises that are perceived as unnatural because they are normally obscured by the louder engine noise and/or at least do not occur in unexpected situations. Such comfort disturbances can be avoided by shifting to higher gears in accordance with the present invention essentially precisely when the fuel supplied has decreased to a suitable level due to reduced running resistance.

According to one embodiment, said shift to a higher gear consists of a shift to the highest gear of the vehicle. According to one embodiment, said shift consists of a shift from a first gear (a first gear ratio) to a higher gear (a lower gear ratio), wherein said shifts can consist of arbitrary shifts in the vehicle transmission as long as said conditions are fulfilled. The invention is thus applicable in connection with arbitrary shifting from any suitable gear ratio to another suitable gear ratio. Furthermore, shifting from a first gear ratio to a closest lower gear ratio need not occur, but rather shifting can occur to a gear ratio through one or a plurality of intermediate gears, such as fixed gears in a transmission with a plurality of fixed gears (gear ratios).

According to a further embodiment, said transmission is adjustable to a low gear ratio at which the combustion engine rpm is lower than the engine rpm at which the torque plateau for said low gear ratio is achieved, whereupon said second gear ratio consists of that gear ratio. In connection with the propulsion of vehicles with such transmissions, the vehicle will likely downshift more often, with the result that the present invention will also be applicable in a plurality of situations.

Additional features of the present invention and the advantages thereof will be presented based on the following detailed description of exemplary embodiments, and in the accompanying drawings.

### Brief description of drawings

- Fig. 1A: shows a power train in a vehicle in which the present invention can be used;
- Fig. 1B: shows a control unit in a vehicle control system;
- Fig. 2: shows an exemplary method according to the present invention;
- Fig. 3: shows the propulsion of a vehicle along an exemplary section of road.
- Fig. 4: shows an alternative exemplary method according to the present invention.

### Detailed description of embodiments

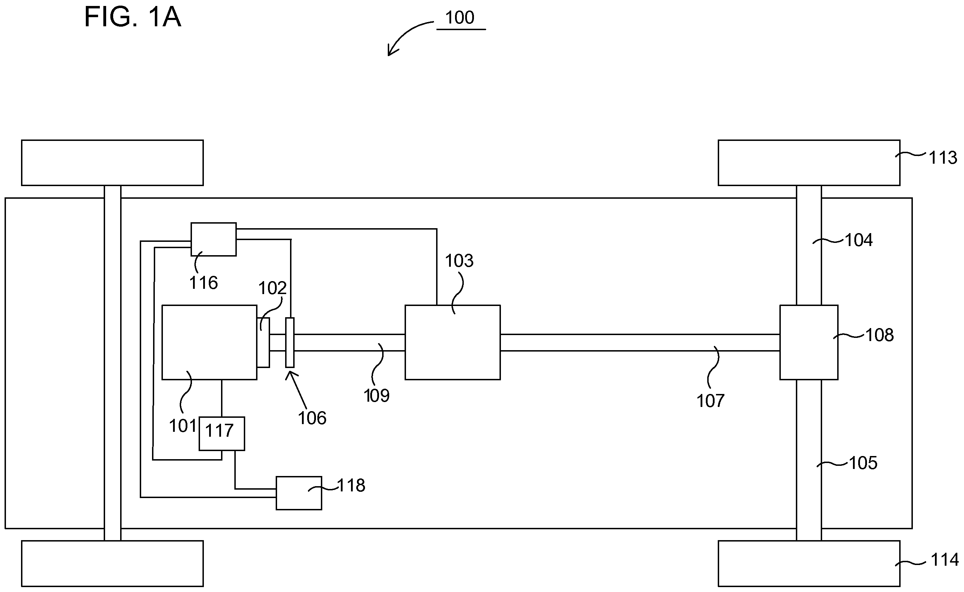

Fig. 1A schematically shows a power train in a vehicle 100 according to one embodiment of the present invention. The vehicle 100 shown schematically in Fig. 1A comprises only one axle 104, 105 with drive wheels 113, 114, but the invention is also applicable to vehicles in which more than one axle is equipped with drive wheels, and in vehicles with one or a plurality of additional axles, such as one or a plurality of support axles. The power train comprises a combustion engine 101, which is connected in a customary manner via an output shaft from the combustion engine 101, normally via a flywheel 102, to a transmission 103 via a clutch 106. An output shaft 107 from the transmission 103 then drives the drive wheels 113, 114 via a final drive 108, such as a common differential, and drive axles 104, 105 connected to said final drive 108.

The clutch 106 consists, in the present example, of an automatically controlled clutch, and is in this embodiment of a type wherein a friction element, such as a plate (not shown) connected to a first transmission part, such as the input shaft 109 to the transmission 103, selectively engages with the engine flywheel 102 to transfer torque from the combustion engine 101 to the drive wheels 113, 114 via the transmission 103. The clutch can, for example, be of the dry or wet-plate type, or of another suitable type, such as a double-clutch transmission with a wet or dry clutch. The invention is also applicable in vehicles wherein a manually controlled clutch is present, as long as shifting can occur automatically. For example, shifting in a vehicle 100 of the type shown in Fig. 1A can be performed by relieving the power train of motive force/torque by controlling the engine so that the transmission 103 is essentially relieved of torque, and shifting can thus occur with the clutch engaged without undesirable jolts occurring in the power train. When the prevailing gear has been disengaged, but before a new gear has been engaged, the rpm of the combustion engine is adjusted to the rpm for the new gear so that, when the gear is engaged, jolts are avoided. This type of shifting can thus be performed automatically regardless of whether the clutch is automatically controlled or not, with the result that the invention is applicable in connection with this type of shifting.

The invention is also applicable in cases where the power train is disengaged by the clutch during the shifting process. In the case of an automatically controlled clutch, the risk of undesirable jolting oscillations at the moment of shifting can be reduced or eliminated entirely by disengaging the clutch, and thus the power train, before the gear ratio in the transmission is changed.

Regardless of the type of shifting process, a shift is normally characterized by a decrease in the fuel supplied, disengagement and engagement of a gear and, finally, a subsequent increase in the fuel supplied. However, as noted above, there are situations in which shifting occurs at a time that is, in at least some respect, less than optimal. According to the present invention, a method is consequently provided for propelling a vehicle, wherein upshifting occurs at a time that is advantageous from the standpoint of both comfort and fuel consumption.

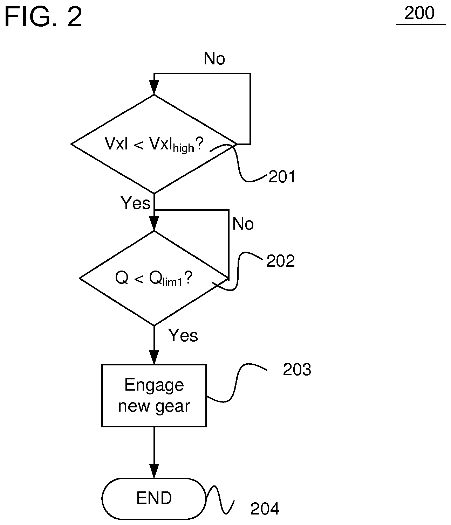

One exemplary method 200 according to the present invention is shown in Fig 2. The invention can be implemented in any suitable control unit, such as the control unit 118 shown in Fig. 1A.

In general, control systems in modern vehicles usually consist of a communication bus system comprising one or a plurality of communication buses for connecting a number of electronic control units (ECUs), or controllers, and various components arranged in the vehicle. Such a control system can comprise a large number of control units, and the responsibility for a specific function can be shared among more than one control unit.

For the sake of simplicity, Fig. 1A shows only the control units 116, 117, 118, while a vehicle 100 of the type shown often comprises significantly more control units, as will be well known to one skilled in the art.

In the present example, the clutch consists, as described above, of an automatically controlled clutch, whereupon the control unit 116 controls the clutch 106 via a clutch actuator (not shown) as well as the transmission 103. In the present example, the control unit 117 controls the engine 101 of the vehicle 100.

The control unit 118, in which the present invention in the embodiment shown is implemented, is responsible for one or a plurality of cruise control functions. Said cruise control functions can be of various types and, according to one embodiment, the cruise control function consists of a conventional type. According to one embodiment the cruise control function consists of a cruise control that uses a "Look Ahead" function. A "Look Ahead" cruise control (LACC, Look Ahead Cruise Control) consists of a cruise control that uses knowledge concerning the upcoming section of road, i.e. knowledge about the appearance of the road in front of the vehicle, in order to adapt the vehicle velocity based on variations in the road along which the vehicle is traveling. The invention can alternatively be implemented in a control unit that is dedicated for the present invention, or wholly or partly in one or a plurality of control units already present in the vehicle 100.

The control of the time of shifting by the control unit 118 (or the control unit(s) in which the present invention is implemented) according to the present invention will likely depend on signals that are received from the control unit(s) that control engine functions, i.e. the control unit 117 in the present example. The control unit 118 will likely also receive signals from other control units arranged in the vehicle and not shown, and/or information from, for example, various transmitters/sensors arranged in the vehicle. Generally speaking, control units of the type shown are normally arranged so as to receive sensor signals from various parts of the vehicle 100.

Control units of the type shown are also normally arranged so as to transmit control signals to various vehicle parts and components. For example, the control unit 118 can demand/order control of the transmission via the control unit 116.

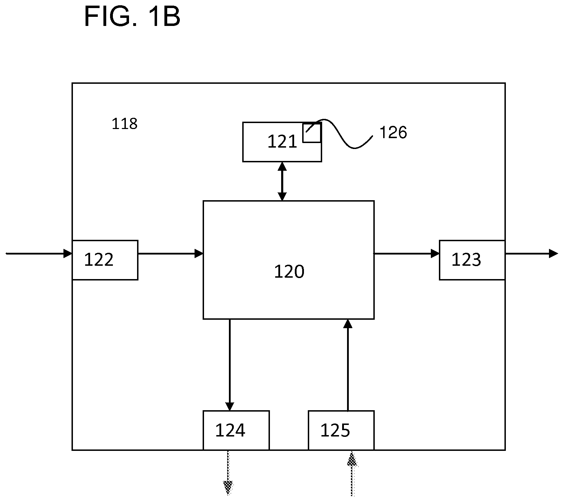

Said control is often controlled by programmed instructions. Said programmed instructions typically consist of a computer program which, when it is executed in a computer or control unit, causes the computer/control unit to exercise the desired control, such as a method step according to the present invention. The computer program usually constitutes a part of a computer program product, wherein said computer program product comprises a suitable storage medium 121 (see Fig. 1B) with the computer program 126 stored on said storage medium 121. Said digital storage medium 121 can, for example, consist of any of the group comprising: ROM (Read-Only Memory), PROM (Programmable Read-Only Memory), EPROM (Erasable PROM), Flash memory, EEPROM (Electrically Erasable PROM), a hard disk unit etc, and be arranged in or in connection with the control unit, whereupon the computer program is executed by the control unit. The behavior of the vehicle in a specific situation can thus be adapted by modifying the instructions of the computer program.

An exemplary control unit (the control unit 118) is shown schematically in Fig. 1B, wherein the control unit can in turn comprise a calculating unit 120, which can consist of, for example, any suitable type of processor or microcomputer, such as a circuit for digital signal processing (Digital Signal Processor, DSP) or a circuit with a predetermined specific function (Application Specific Integrated Circuit, ASIC). The calculating unit 120 is connected to a memory unit 121, which furnishes the calculating unit 120, with e.g. the stored program code 126 and/or the stored data that the calculating unit 120 requires to be able to perform calculations. The calculating unit 120 is also arranged so as to store partial or final results of calculations in the memory unit 121.

Furthermore, the control unit 118 is equipped with devices 122, 123, 124, 125 for receiving and transmitting input and output signals, respectively. These input and output signals can comprise waveforms, pulses or other attributes that the devices 122, 125 for receiving input signals can detect as information for processing by the calculating unit 120. The devices 123, 124 for transmitting output signals are arranged so as to convert calculation results from the calculating unit 120 into output signals for transfer to other parts of the vehicle control system and/or the component(s) for which the signals are intended. Each and every one of the connections to the devices for receiving and transmitting respective input and output signals can consist of one or more of a cable; a data bus, such as a CAN bus (Controller Area Network bus), a MOST bus (Media Oriented Systems Transport) or any other bus configuration, or of a wireless connection.

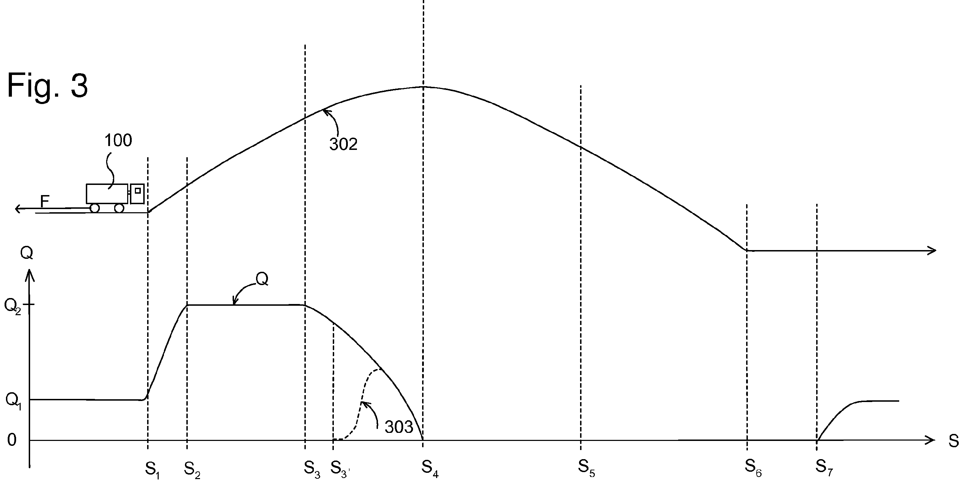

Fig. 3 shows an exemplary scenario for the propulsion of a vehicle, in relation to which the exemplary method shown in Fig. 2 will be described. Figure 3 shows the vehicle 100, which is traveling along a road 302 with supplied fuel Q. The vehicle 100 has been driven along a horizontal section of road at a constant velocity with supplied fuel Q₁ to the combustion engine of the vehicle. In the figure, the vehicle 100 has just reached a position S₁, at which an uphill stretch begins. When the vehicle 100 passes the position S₁, the gradient gradually increases, as does the running resistance of the vehicle in turn, resulting in an increased need for supplied fuel Q.

The running resistance F of the vehicle increases continuously as the gradient of the uphill section increases. The running resistance consists of the force acting on the drive wheels of the vehicle that must be overcome in order for the velocity of the vehicle to be maintained. If the torque delivered by the combustion engine results in a force acting on the drive wheels that exceeds the prevailing running resistance, the vehicle will be able to accelerate. In the opposite situation, the vehicle will retard. The running resistance can also be negative, i.e. it will itself accelerate the vehicle, e.g. in connection with at least some downhill stretches. The vehicle control system normally estimates the running resistance, which can be done in some suitable way, a plurality of which are described in the prior art. When the running resistance increases in Fig. 3, a simultaneous increase in the supplied fuel Q occurs in order to reach, at a position S₂, a section of road with an essentially constant gradient, resulting in an essentially constant quantity of supplied fuel Q₂, which constitutes an essentially higher fuel level compared with the fuel level Q₁. At the same time a downshift is performed from, in the present example, a higher gear in the vehicle transmission 103 to a lower gear, which downshift can involve one or a plurality of lower gears. The vehicle is then driven up the uphill stretch. When the vehicle is driven along the uphill stretch, a method according to Fig. 2 is carried out.

The method begins in step 201, wherein a determination is made as to whether the prevailing gear consists of a lower gear than some suitable gear, such as a lower gear than a highest gear. If such is the case, as it is based on the foregoing when the vehicle 100 is traveling along the uphill section shown in Fig 3, the method continues on to step 202.

The transition from step 201 to step 202 can also involve alternative or additional criteria. For example, a determination can be made as to whether the vehicle velocity v_{f} exceeds some suitable velocity v₁, wherein the velocity v₁ can, for example, consist of a minimum velocity at which shifting to a higher gear is assumed to be able to be carried out, given that the other conditions so permit. According to one embodiment, the method according to the present invention is carried out only if the vehicle velocity exceeds some suitable velocity, whereupon the method can thus be arranged so that it is applied only in certain (higher) gears, and not in connection with travel in an arbitrary gear.

In step 202 a determination is made as to whether a desired quantity of supplied fuel Q, which can, for example, be demanded by any suitable function in the control system of the vehicle 100, such as, for example, by the control unit 117 based on control signals from the cruise control function 118 for driving the vehicle 100, exceeds some suitable limit Qₗᵢₘ₁. The method remains in step 202 for as long as such is the case.

As long as the vehicle 100 is traveling on the uphill stretch, the quantity of fuel demanded for propelling the vehicle 100 will be relatively high, and will depend upon the running resistance of the vehicle 100, which running resistance will depend upon, for example, the prevailing vehicle weight in addition to the gradient of the vehicle route.

When the gradient subsequently begins to decrease, the need for motive force will begin to decrease, whereupon a reduction of the fuel supplied to the combustion engine of the vehicle will begin. This is indicated as the position S₃ in Fig. 3, where the uphill stretch begins to flatten out and a reduction of the fuel supplied from the level Q₂ is begun.

The method will thus remain in step 202 for as long as the demanded fuel supplied Q exceeds the level Qₗᵢₘ₁.

The level Qₗᵢₘ₁ can, for example, consist of a quantity of supplied fuel that entails that essentially no torque is demanded from the combustion engine for transfer to said drive wheels, i.e. the amount of fuel supplied entails only that the combustion engine essentially generates only a force that overcomes internal losses plus the force that is required to power any unit being powered by the output shaft of the combustion engine.

The level Qₗᵢₘ₁ can also consist, for example, of a level at which the demand for injected fuel has decreased to zero. When zero fuel is demanded, the torque demanded from the combustion engine is also equal to zero. Because fuel must be injected in order to obtain 0 Nm at the output shaft of the combustion engine, i.e. to overcome friction losses in the combustion engine etc as per the foregoing, an injected fuel quantity of zero, i.e. Qₗᵢₘ₁ = 0, will entail that the torque generated by the combustion engine will be negative, due to losses in the power train.

Once the need for fuel supplied to the combustion engine 101 of the vehicle 100 has subsequently decreased to the level Qₗᵢₘ₁ (as determined as some suitable level as per the foregoing) at the position S₄ in Fig. 3, the method continues on to step 203.

Methods of this type are normally run through a large number of times per second, whereupon the method will thus transition from step 202 to step 203 essentially precisely when the need for fuel supplied to the combustion engine of the vehicle has decreased to the level Qₗᵢₘ₁. In step 203, an upshift occurs immediately to a higher gear compared to the current gear. This upshift to a higher gear thus occurs precisely when the supplied fuel has decreased to the level Qₗᵢₘ₁, i.e. precisely when, for example, the combustion engine ceases to deliver motive force to the drive wheels, whereupon the shift is performed at a moment that feels entirely natural to the vehicle driver, as such a fuel reduction will normally precede a shift. The vehicle can then be driven on the ensuing downhill stretch in a higher gear, or preferably with the highest gear engaged. The method concludes in step 204.

The present invention thus provides a method for upshifting to a higher gear at an early point, while at the same time said shift will occur in a manner that results in extremely good driver comfort. The method shown can, for example, be arranged so as to be implemented in a cruise control function, but it can also be arranged so as to be carried out when the vehicle is being driven without an activated cruise control function.

According to the embodiments shown, the vehicle is driven, after the position S₄, on a downhill stretch that ends at the position S₆[.] At a suitable time, when the vehicle velocity has decreased to some suitable velocity, the supply of fuel to the combustion engine will resume; in this example when the vehicle has reached the position S₇. If a shift to a higher gear should not be performed at the position S₄, but rather, for example, not until the position S₅, this would entail unnatural/unexpected noise from the power train of the vehicle, since the vehicle at the position S₅ would likely be driven with the supply of fuel cut off, and thus at a relatively low level of engine noise, whereupon the noise level in the cab would also be relatively low. If, in this situation, the current gear is disengaged and a new gear is engaged, it would give rise to disturbing metallic noise that could seem highly abnormal to the driver, and thus give cause for concern. Unexpected/undesirable engine noise will also occur in connection with, in particular, clutchless shifting, since the combustion engine 101 needs to be used to achieve zero torque in the power train in connection with the disengagement of the current gear. Disturbing operation of the combustion engine is also necessary during rpm synchronization in connection with engaging the new gear. Alternatively, the clutch can be used during the gear change but in this case there would instead be a jolt in the car if combustion in the combustion engine 101 were not used to match the new engine rpm. Such situations are avoided according to the present invention, regardless of the type of gear change.

It is similarly conceivable that, for example, a cruise control function could be arranged so as to engage a higher gear before the vehicle reaches the position S₄, such as between the positions S₃ and S₄. If an upshift were to occur beforehand at, for example, the position S₃', the fuel supplied would first be brought down to the zero torque level and then, after shifting, increased back up to the required level. This is indicated by a broken line 303 in Fig. 3. This shift with a fuel reduction and subsequent fuel increase would seem normal to the driver of the vehicle, but said fuel reduction with a subsequent increase would, as shown, be followed immediately by a new fuel reduction due to the reduced running resistance, which would in combination give rise to a spasmodic driving experience as a result. The present invention avoids such undesirable situations as well.

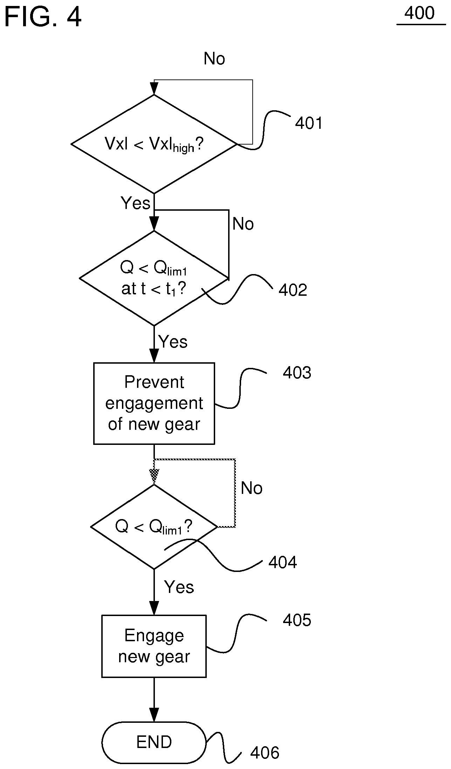

Fig. 4 shows an alternative exemplary method 400 according to the present invention. The method begins in step 401, wherein a determination is made, as in the method shown in Fig. 2, as to whether the prevailing gear consists of a lower gear than some suitable gear, whereupon, if such is the case, the method continues on to step 402. The transition from step 401 to step 402 can also be controlled by alternative or additional criteria as per the foregoing.

In contrast to the method shown in Fig. 2, no determination is made in step 402 as to whether the desired supplied fuel Q is lower than some applicable limit Qₗᵢₘ₁, but rather a determination is instead made in step 402 as to whether a reduction in the supplied fuel to the level Qₗᵢₘ₁ can be expected within a first time t₁. According to the foregoing, the level Qₗᵢₘ₁ can, for example, consist of a quantity of fuel entailing that essentially no torque is demanded from said combustion engine 101 for transfer to said drive wheels, or of a level at which the fuel supplied to the combustion engine 101 has decreased to zero.

Said first time t₁ can be set to any suitable time, such as a given number of seconds, for example a suitable number of seconds in any of the ranges 0-3 seconds, 0-5 seconds or 0-10 seconds. For example, the time t₁ can be set so that situations associated with the position S₃' as described above can be avoided. Furthermore, said determination can be performed with the help of, for example, the cruise control function, wherein the estimation can, for example, be performed based on how quickly a prevailing decrease in the supplied fuel occurs, such as based on a derivative based on the change in the supplied fuel Q between S₃ and S₄ in Fig. 3, whereupon an expected time at which the supplied fuel is assumed to have decreased to zero, such as when the vehicle has reached the position S₄, can be determined. Alternatively, the cruise control function can, for example, consist of a look-ahead cruise control function as described above which, with knowledge about the road ahead of the vehicle, can estimate when the demand for motive force will decrease to zero, whereupon said first time t₁ can thereby be determined with high accuracy based on such data.

The method will remain in step 402 for as long as the supplied fuel Q is not expected to decrease to the level Qₗᵢₘ₁ within said first time t₁. If, on the other hand, it is determined in step 402 that the demand for supplied fuel Q is expected to drop to the level Qₗᵢₘ₁ within said first time t₁, then the method will continue on to step 403.

Active shifting is prevented in step 403 during said first time t₁. For example, the cruise control function or some other suitable function can be arranged so as to signal the control unit 116 that shifting cannot occur within said first time t₁ so that undesired shifting can thereby be avoided during said first time period t₁.

The method then continues on to step 404, wherein a determination according to step 202 in Fig. 2 is performed, and when the fuel supplied to the combustion engine has been reduced to the level Qₗᵢₘ₁, the method continues on to step 405, wherein an immediate upshift to a gear that is higher than the current gear is performed. Said upshift to a higher gear thus occurs as per the foregoing precisely when the supplied fuel has decreased to the level Qₗᵢₘ₁, whereupon shifting can thus, for example, be performed precisely or essentially precisely when the fuel supplied to the combustion engine has been decreased to zero, and whereupon, again, shifting is performed at an instant that feels entirely natural to the driver of the vehicle. The method then concludes in step 406.

According to this embodiment, additional assurance against undesired shifts, such as shifts of the type described in connection with the position S₃'above is obtained in situations where shifting could, at least from a comfort standpoint, be performed at a more suitable time. In those cases where a shift to a higher gear would instead have occurred at an earlier time, the present invention also results in a fuel-saving action.

According to one exemplary embodiment, shifting in step 203 and step 405 is performed to a low gear ratio at which the vehicle is, at its cruising velocity, driven at an engine rpm that is lower than the engine rpm at which the torque plateau for the gear is achieved. This means that maximum torque will not be available in such a gear, with the result that it cannot be driven in, other than under circumstances wherein the demand for motive force is reduced.

As can be seen, the present invention is not limited to the embodiments of the invention described above, but rather concerns and includes all embodiments with the protective scope of the accompanying independent claims.

## Claims

1. A method related to the propulsion of a vehicle (100), wherein said vehicle (100) comprises a combustion engine (101), and wherein said combustion engine (101) can selectively be coupled to at least one drive shaft (104, 105) to impart a torque to said drive shaft (104, 105) in order to propel said vehicle (100) via a transmission (103), wherein said transmission (103) can be set to a plurality of gear ratios, and wherein the propulsion of said vehicle (100) is affected by a running resistance (F), **characterized in that** the method comprises, when said vehicle (100) is driven with said transmission (103) set to a first gear ratio:
- a determination as to whether a supply of a quantity of fuel (Q) to said combustion engine (101) has decreased to a first level due to reduced running resistance (F), and
- setting said transmission to a second gear ratio that is lower compared to said first gear ratio within a first time from when said fuel supplied (Q) to said combustion engine (101) has decreased to said first level.

2. A method according to claim 1, wherein said transmission is set to said second gear ratio essentially precisely when said fuel supplied to said combustion engine (101) has decreased to said first level.

3. A method according to claim 1 or 2, wherein said first level for said supplied fuel consists of a level at which essentially no torque is demanded from said combustion engine (101) for transfer to said drive shaft (104, 105).

4. A method according to any of claims 1-3, wherein said first level for said supplied fuel consists of a level at which essentially no fuel is supplied to said combustion engine (101).

5. A method according to any of claims 1-4, wherein said first time consists of a suitable time within the range 0-3 seconds, preferably a suitable time within the range 0-1 seconds.

6. A method according to any of claims 1-5, further comprising, when said vehicle (100) is driven with supplied fuel to said combustion engine (101) in excess of said first level:
- estimating whether the fuel supplied to said combustion engine (101) is expected to decrease to said first level within a second time, and
- preventing a shift to a lower gear ratio during said second time.

7. A method according to claim 6, wherein said estimation is performed with the help of data concerning the route ahead of the vehicle (100), wherein said data consists of at least one of the group comprising:
- the gradient of the route ahead of the vehicle;
- data concerning the topography of the road comprising the route ahead of the vehicle (100);
- the position of the vehicle (100).

8. A method according to claim 6 or 7, wherein said estimation is performed with the help of data concerning an ongoing reduction in the fuel supplied to said combustion engine (101).

9. A method according to any of the preceding claims, where said second lower gear ratio consists of the lowest engageable gear ratio of said transmission.

10. A method according to any of the preceding claims, wherein said second gear ratio consists of a low gear ratio at which the combustion engine rpm during propulsion of the vehicle is lower than the engine rpm at which the torque plateau for said low gear ratio is achieved.

11. A method according to any of claims 1-10, further comprising:
- a determination as to whether said transmission is to be set to a second gear ratio that is lower compared to said first gear ratio by means of at least one control unit (118) arranged in the control system of the vehicle (100).

12. A method according to any of claims 1-11, wherein a cruise control function for said vehicle (100) is activated in connection with a determination as to whether said transmission is to be set to a second gear ratio that is lower compared to said first gear ratio.

13. A computer program comprising program code that, when said program code is executed in a computer, causes said computer to carry out the method according to any of claims 1-12.

14. A computer program product comprising a computer-readable medium and a computer program according to claim 13, wherein said computer program is contained in said computer-readable medium.

15. A system related to the propulsion of a vehicle (100), wherein said vehicle (100) comprises a combustion engine (101), and wherein said combustion engine (101) can selectively be coupled to at least one drive shaft (104, 105) for imparting a torque to said drive shaft (104, 105) in order to propel said vehicle (100) via a transmission (103), wherein said transmission (103) can be set to a plurality of gear ratios, and wherein the propulsion of said vehicle (100) is affected by a running resistance (*F*), **characterized in that** the system comprises elements configured for, when said vehicle (100) is driven with said transmission (103) set to a first gear ratio:
- determining whether a supply of a quantity of fuel (Q) to said combustion engine (101) has decreased to a first level due to reduced running resistance (F), and
- setting said transmission to a second gear ratio that is lower compared to said first gear ratio within a first time from when said supplied fuel (Q) to said combustion engine (101) has decreased to said first level

16. A system according to claim 15, wherein said transmission (103) can be set to a first number of fixed gear ratios.

17. A vehicle, **characterized in that** it comprises a system according to any of claims 15-16.

## Patentansprüche

1. Verfahren für den Antrieb eines Fahrzeugs (100), wobei das Fahrzeug (100) einen Verbrennungsmotor (101) aufweist, und wobei der Verbrennungsmotor (101) selektiv mit mindestens einer Antriebswelle (104, 105) gekoppelt werden kann, um die Antriebswelle (104, 105) mit einem Drehmoment zum Antrieb des Fahrzeugs (100) über ein Getriebe (103) zu beaufschlagen, wobei das Getriebe (103) auf eine Mehrzahl Übersetzungsverhältnisse eingestellt sein kann, und wobei der Antrieb des Fahrzeugs (100) durch einen Fahrwiderstand (*F*) beeinträchtigt wird, **dadurch gekennzeichnet, dass** das Verfahren, wenn das Fahrzeug (100) bei Einstellung des Getriebes (103) auf ein erstes Übersetzungsverhältnis gefahren wird, aufweist:
- eine Bestimmung, ob die Zufuhr einer Kraftstoffmenge (Q) zum Verbrennungsmotor (101) aufgrund eines verringerten Fahrwiderstands (*F*) auf ein erstes Niveau gesunken ist, und
- Einstellen des Getriebes (103) auf ein zweites Übersetzungsverhältnis, das im Vergleich zum ersten Übersetzungsverhältnis niedriger ist, innerhalb einer ersten Zeitspanne ab dem Zeitpunkt, zu dem der dem Verbrennungsmotor (101) zugeführte Kraftstoff (Q) auf das erste Niveau gesunken ist.

2. Verfahren nach Anspruch 1, wobei das Getriebe im Wesentlichen präzise auf das zweite Übersetzungsverhältnis eingestellt wird, wenn der dem Verbrennungsmotor (101) zugeführte Kraftstoff (Q) auf das erste Niveau gesunken ist.

3. Verfahren nach Anspruch 1 oder 2, wobei das erste Niveau für den zugeführten Kraftstoff ein Niveau ist, bei dem im Wesentlichen vom Verbrennungsmotor (101) kein an die Antriebswelle (104, 105) zu übertragendes Drehmoment angefordert wird.

4. Verfahren nach einem der Ansprüche 1 bis 3, wobei das erste Niveau für den zugeführten Kraftstoff ein Niveau ist, bei dem dem Verbrennungsmotor (101) im Wesentlichen kein Kraftstoff zugeführt wird.

5. Verfahren nach einem der Ansprüche 1 bis 4, wobei die erste Zeitspanne eine geeignete Zeitspanne im Bereich von 0 bis 3 Sekunden, vorzugsweise eine geeignete Zeitspanne im Bereich von 0 bis 1 Sekunde ist.

6. Verfahren nach einem der Ansprüche 1 bis 5, das dann, wenn das Fahrzeug (100) mit dem Verbrennungsmotor (101) mit einem über das erste Niveau hinausgehenden zugeführten Kraftstoff gefahren wird, ferner aufweist:
- Schätzen, ob der dem Verbrennungsmotor (101) zugeführte Kraftstoff innerhalb einer zweiten Zeitspanne wahrscheinlich auf das erste Niveau sinkt, und
- Verhindern, dass während der zweiten Zeitspanne auf ein niedrigeres Übersetzungsverhältnis geschaltet wird.

7. Verfahren nach Anspruch 6, wobei die Schätzung mit Hilfe von Daten bezüglich der vor dem Fahrzeug (100) liegenden Strecke erfolgt, wobei die Daten aus mindestens einer der folgenden Gruppen bestehen:
- Gefälle der vor dem Fahrzeug liegenden Strecke;
- Daten bezüglich der Topographie der Straße, einschließlich der vor dem Fahrzeug liegenden Strecke;
- Position des Fahrzeugs (100).

8. Verfahren nach Anspruch 6 oder 7, wobei die Schätzung mit Hilfe von Daten bezüglich einer ständigen Verringerung des dem Verbrennungsmotor (101) zugeführten Kraftstoffs erfolgt.

9. Verfahren nach einem der vorigen Ansprüche, wobei das zweite niedrigere Übersetzungsverhältnis das niedrigste schaltbare Übersetzungsverhältnis des Getriebes ist.

10. Verfahren nach einem der vorigen Ansprüche, wobei das zweite Übersetzungsverhältnis ein niedriges Übersetzungsverhältnis ist, bei dem die Drehzahl des Verbrennungsmotors niedriger ist als die Drehzahl des Verbrennungsmotors, bei der das Drehmoment-Plateau für dieses niedrige Übersetzungsverhältnis erreicht wird.

11. Verfahren nach einem der Ansprüche 1 bis 10, ferner aufweisend:
- eine Bestimmung, ob das Getriebe mittels mindestens einer Steuereinheit (118), die im Steuersystem des Fahrzeugs (100) angeordnet ist, auf ein zweites Übersetzungsverhältnis einzustellen ist, das im Vergleich zum ersten Übersetzungsverhältnis niedriger ist.

12. Verfahren nach einem der Ansprüche 1 bis 11, wobei eine Fahrgeschwindigkeitsregelungsfunktion für das Fahrzeug (100) in Zusammenhang mit der Bestimmung, ob das Getriebe auf ein zweites Übersetzungsverhältnis einzustellen ist, das im Vergleich zum ersten Übersetzungsverhältnis niedriger ist, aktiviert wird.

13. Computerprogramm, das einen Programmcode aufweist, der bei Ausführung des Computerprogramms auf einem Computer den Computer veranlasst, das Verfahren gemäß einem Ansprüche 1 bis 12 auszuführen.

14. Computerprogrammprodukt, das ein computerlesbares Medium und ein Computerprogramm nach Anspruch 13 aufweist, wobei das Computerprogramm in dem computerlesbaren Medium enthalten ist.

15. System für den Antrieb eines Fahrzeugs (100), wobei das Fahrzeug (100) einen Verbrennungsmotor (101) aufweist, und wobei der Verbrennungsmotor (101) selektiv mit mindestens einer Antriebswelle (104, 105) gekoppelt werden kann, um die Antriebswelle (104, 105) mit einem Drehmoment zum Antrieb des Fahrzeugs (100) über ein Getriebe (103) zu beaufschlagen, wobei das Getriebe (103) auf eine Mehrzahl Übersetzungsverhältnisse eingestellt werden kann, und wobei der Antrieb des Fahrzeugs (100) durch einen Fahrwiderstand (*F*) beeinträchtigt wird, **dadurch gekennzeichnet, dass** das System Elemente aufweist, die dann, wenn das Fahrzeug (100) bei Einstellung des Getriebes (103) auf ein erstes Übersetzungsverhältnis gefahren wird, konfiguriert sind zum:
- Bestimmen, ob die Zufuhr einer Kraftstoffmenge (Q) zum Verbrennungsmotor (101) aufgrund eines verringerten Fahrwiderstands (*F*) auf ein erstes Niveau gesunken ist, und
- Einstellen des Getriebes auf ein zweites Übersetzungsverhältnis, das im Vergleich zum ersten Übersetzungsverhältnis niedriger ist, innerhalb einer ersten Zeitspanne ab dem Zeitpunkt, zu dem der dem Verbrennungsmotor (101) zugeführte Kraftstoff (Q) auf das erste Niveau gesunken ist.

16. System für den Antrieb eines Fahrzeugs (100), wobei das Getriebe (103) auf eine erste Zahl festgelegter Übersetzungsverhältnisse eingestellt werden kann.

17. Fahrzeug, **dadurch gekennzeichnet, dass** es ein System nach einem der Ansprüche 15 bis 16 aufweist.

## Revendications

1. Procédé associé à la propulsion d'un véhicule (100), dans lequel ledit véhicule (100) comprend un moteur à combustion (101), et dans lequel ledit moteur à combustion (101) peut être couplé de façon sélective à au moins un arbre d'entraînement (104, 105) de façon à communiquer un couple audit arbre d'entraînement (104, 105) afin de propulser ledit véhicule (100) par l'intermédiaire d'une transmission (103), ladite transmission (103) pouvant être établie dans une pluralité de rapports de vitesse, et la propulsion dudit véhicule (100) étant affectée par une résistance au déplacement (F), **caractérisé en ce que** le procédé comprend, lorsque ledit véhicule (100) est entraîné avec ladite transmission (103) établie dans un premier rapport de vitesse :
- une détermination du fait qu'une délivrance d'une quantité de carburant (Q) audit moteur à combustion (101) a ou non diminué à un premier niveau du fait d'une résistance au déplacement (F) réduite, et
- l'établissement de ladite transmission à un deuxième rapport de vitesse qui est plus bas par rapport audit premier rapport de vitesse à l'intérieur d'un premier temps à partir du moment où ledit carburant délivré (Q) audit moteur à combustion (101) a diminué audit premier niveau.

2. Procédé selon la revendication 1, dans lequel ladite transmission est établie audit deuxième rapport de vitesse essentiellement précisément lorsque ledit carburant délivré audit moteur à combustion (101) a diminué audit premier niveau.

3. Procédé selon la revendication 1 ou 2, dans lequel ledit premier niveau pour ledit carburant délivré consiste en un niveau auquel essentiellement aucun couple n'est demandé audit moteur à combustion (101) pour le transfert audit arbre d'entraînement (104, 105).

4. Procédé selon l'une quelconque des revendications 1 à 3, dans lequel ledit premier niveau pour ledit carburant délivré consiste en un niveau auquel essentiellement aucun carburant n'est délivré audit moteur à combustion (101).

5. Procédé selon l'une quelconque des revendications 1 à 4, dans lequel ledit premier temps consiste en un temps approprié à l'intérieur de la plage de 0 à 3 secondes, et, de préférence, en un temps approprié à l'intérieur de la plage de 0 à 1 seconde.

6. Procédé selon l'une quelconque des revendications 1 à 5, comprenant de plus, lorsque ledit véhicule (100) est entraîné avec un carburant délivré audit moteur à combustion (101) en excès par rapport audit premier niveau :
- l'estimation du fait qu'il est ou non prévu que le carburant délivré audit moteur à combustion (101) diminue audit premier niveau à l'intérieur d'un deuxième temps, et
- la prévention d'un changement de vitesses vers un rapport de vitesse inférieur durant ledit deuxième temps.

7. Procédé selon la revendication 6, dans lequel ladite estimation est effectuée à l'aide de données concernant l'itinéraire à l'avant du véhicule (100), dans lequel lesdites données sont constituées par au moins l'un du groupe comprenant :
- le gradient de l'itinéraire à l'avant du véhicule ;
- des données concernant la topographie de la route constituant l'itinéraire à l'avant du véhicule (100) ;
- la position du véhicule (100).

8. Procédé selon la revendication 6 ou 7, dans lequel ladite estimation est effectuée à l'aide de données concernant une réduction en cours dans le carburant délivré audit moteur à combustion (101).

9. Procédé selon l'une quelconque des revendications précédentes, dans lequel ledit deuxième rapport de vitesse plus bas est constitué par le plus bas rapport de vitesse pouvant être engagé de ladite transmission.

10. Procédé selon l'une quelconque des revendications précédentes, dans lequel ledit deuxième rapport de vitesse est constitué par un rapport de vitesse bas auquel la vitesse de rotation du moteur à combustion durant la propulsion du véhicule est inférieure à la vitesse de rotation du moteur à laquelle le plateau de couple pour ledit rapport de vitesse bas est obtenu.

11. Procédé selon l'une quelconque des revendications 1 à 10, comprenant de plus :
- une détermination du fait que ladite transmission doit ou non être établie à un deuxième rapport de vitesse qui est plus bas par rapport audit premier rapport de vitesse à l'aide d'au moins une unité de commande (118) disposée dans le système de commande du véhicule (100).

12. Procédé selon l'une quelconque des revendications 1 à 11, dans lequel une fonction de commande de vitesse de croisière pour ledit véhicule (100) est activée en relation avec une détermination du fait que ladite transmission doit ou non être établie à un deuxième rapport de vitesse qui est plus bas par rapport audit premier rapport de vitesse.

13. Programme informatique comprenant un code de programme qui, lorsque ledit code de programme est exécuté dans un ordinateur, provoque l'exécution par ledit ordinateur du procédé selon l'une quelconque des revendications 1 à 12.

14. Produit de programme informatique comprenant un support lisible par un ordinateur et un programme informatique selon la revendication 13, dans lequel ledit programme informatique est contenu dans ledit support lisible par un ordinateur.

15. Système associé à la propulsion d'un véhicule (100), dans lequel ledit véhicule (100) comprend un moteur à combustion (101), et dans lequel ledit moteur à combustion (101) peut être couplé de façon sélective à au moins un arbre d'entraînement (104, 105) pour communiquer un couple audit arbre d'entraînement (104, 105) afin de propulser ledit véhicule (100) par l'intermédiaire d'une transmission (103), ladite transmission (103) pouvant être établie dans une pluralité de rapports de vitesse, et la propulsion dudit véhicule (100) étant affectée par une résistance au déplacement (F), **caractérisé en ce que** le système comprend des éléments configurés pour, lorsque ledit véhicule (100) est entraîné avec ladite transmission (103) établie dans un premier rapport de vitesse :
- déterminer si une délivrance d'une quantité de carburant (Q) audit moteur à combustion (101) a ou non diminué à un premier niveau du fait d'une résistance au déplacement (F) réduite, et
- établir ladite transmission à un deuxième rapport de vitesse qui est plus bas par rapport audit premier rapport de vitesse à l'intérieur d'un premier temps à partir du moment où ledit carburant délivré (Q) audit moteur à combustion (101) a diminué audit premier niveau.

16. Système selon la revendication 15, dans lequel ladite transmission (103) peut être établie dans un premier nombre de rapports de vitesse fixes.

17. Véhicule, **caractérisé en ce qu'**il comprend un système selon l'une quelconque des revendications 15 à 16.
